# DEMANDE DE BREVET EUROPEEN

(11) **EP 2 653 817 A1**
(43) Date de publication de la demande: **23.10.2013**
(21) Numéro de dépôt: 13162675.6
(22) Date de dépôt: 08.04.2013
(51) Int. Cl.: F28D 7/02, F28D 21/00

(54) **Dispositif de récupération d'énergie calorifique**

(30) Priorité: 18.04.2012 FR 1253548
(71) Demandeur: Piccuezzu, Eric, 06410 Biot (FR); Guglielmetti, Valerie, 06410 Biot (FR)
(72) Inventeur: Piccuezzu, Eric, 06410 Biot (FR); Guglielmetti, Valerie, 06410 Biot (FR)
(74) Mandataire: Decobert, Jean-Pascal

(57) **Abrégé**

Dispositif (1) de récupération d'énergie calorifique, comprenant au moins un canal de circulation d'air applicable sur la surface extérieure d'un conduit (2) d'évacuation d'un fluide chauffé, le canal de circulation d'air étant configuré pour chauffer de l'air au cours de sa circulation entre une embouchure d'entrée (13) et une embouchure de sortie (14) du canal, les embouchures d'entrée et de sortie (13), (14) étant espacées suivant une direction d'évacuation du fluide chauffé, caractérisé par le fait qu'il comporte des moyens de ventilation (12) du canal configuré pour créer une circulation forcée de l'air depuis l'embouchure d'entrée (13) en direction de l'embouchure de sortie (14).

## Description

La présente invention concerne un dispositif de récupération d'énergie calorifique. L'invention trouve son application dans le domaine notamment d'accessoires pour appareils de chauffage tels un poêle à bois ou à charbon, pour l'équipement de leur conduit d'évacuation de fumée.

La publication EP-A1 - 0088710 divulgue un dispositif applicable sur le conduit de gaz brûlés et bénéficiant d'un mouvement d'air chaud montant pour opérer une récupération d'énergie par un chauffage induit d'air appartenant au volume ambiant de la pièce à chauffer par laquelle passe le conduit.

En pratique, ce type de dispositif s'avère généralement lourd et peu efficace. En particulier, l'énergie calorifique récupérée par ce biais est négligeable relativement aux moyens mis en oeuvre, peu esthétiques et encombrants.

Le document US-A-4.448.348 présente un dispositif de capture de chaleur r disposant d'un ventilateur et un ensemble métallique applicable autour d'un conduit de cheminée. Néanmoins, ce type de système est fortement contraint par la forme et/ou les dimensions et/ou les tolérances géométriques du conduit si l'on souhaite une installation efficace et une circulation d'air chauffé sans fuites rédhibitoires au rendement.

L'invention a pour objet de remédier en tout ou partie aux inconvénients des dispositifs connus jusqu'à présent et propose à cet effet un nouveau dispositif de récupération d'énergie calorifique.

Ce dispositif comprend au moins un canal de circulation d'air applicable sur la surface extérieure d'un conduit d'évacuation d'un fluide chauffé. Le canal de circulation d'air est configuré pour chauffer de l'air au cours de sa circulation entre une embouchure d'entrée et une embouchure de sortie du canal. Selon l'invention, les embouchures d'entrée et de sortie sont espacées suivant une direction d'évacuation du fluide chauffé. Avantageusement, le dispositif comporte en outre des moyens de ventilation du canal configurés pour créer une circulation forcée de l'air depuis l'embouchure d'entrée en direction de l'embouchure de sortie.

Grâce aux moyens de ventilation, le dispositif de l'invention améliore très sensiblement l'efficacité de la récupération d'énergie. D'une part, le débit d'air circulant est augmenté ce qui favorise le rendement. En outre, grâce à la ventilation, l'air chauffé peut être projeté plus loin qu'aux abords immédiats de la périphérie du conduit.

Suivant un aspect avantageux de l'invention, l'embouchure d'entrée est située à un niveau de hauteur supérieur à l'embouchure de sortie. De cette façon, on contrarie la tendance naturelle de l'air chaud à monter et on ramène l'air chauffé à une hauteur plus basse de sorte que le ressenti de chaleur par les occupants de la pièce équipée du dispositif est supérieur. On évite la formation d'une strate d'air chaud située à proximité des plafonds et en pratique quasiment inutile.

Suivant une caractéristique optionnelle de l'invention, le canal de circulation d'air comporte au moins une portion de forme hélicoïdale autour du conduit. De la sorte, en équipant une portion de hauteur limitée du conduit, par exemple 30 à 40 centimètres, on obtient un chemin de circulation suffisamment long pour que les échanges thermiques entre les gaz chauffés du conduit et l'air circulant dans le canal de circulation soient importants.

D'autres caractéristiques optionnelles qui peuvent être utilisées séparément ou combinées sont introduites ci après :
- le canal de circulation d'air comporte une enveloppe délimitant par rapport à l'air ambiant un volume de transit et une couche d'interface entre le volume de transit et la surface extérieure du conduit.
- la couche d'interface comporte une pâte thermique.
- l'enveloppe est monobloc.
- le canal de circulation d'air est déformable de façon rémanente de sorte à s'enrouler autour du conduit.
- l'enveloppe est flexible et comporte une armature déformable de façon rémanente de sorte à maintenir en forme le canal de circulation.
- il comporte suivant la longueur de l'enveloppe, des organes de câblage électrique configurés pour opérer une jonction électrique entre des moyens de raccordement à une alimentation électrique et une motorisation électrique des moyens de ventilation.
- dans un mode de réalisation, le canal de circulation d'air est formé dans au moins deux pièces assemblables autour du conduit.
- les au moins deux pièces sont assemblables suivant des jonctions orientées selon la dimension longue du conduit.
- les deux pièces ont chacune une forme en demi cylindre.

Les dessins ci-joints sont donnés à titre d'exemples et ne sont pas limitatifs de l'invention. Ils représentent seulement un mode de réalisation de l'invention et permettront de la comprendre aisément.
La figure 1 schématise un exemple d'implantation du dispositif de l'invention.
La figure 2 est une vue en coupe de l'invention au niveau d'une ligne AA visible en figure 3.
La figure 3 présente une partie de l'invention en agrandissement relativement à la figure 1.

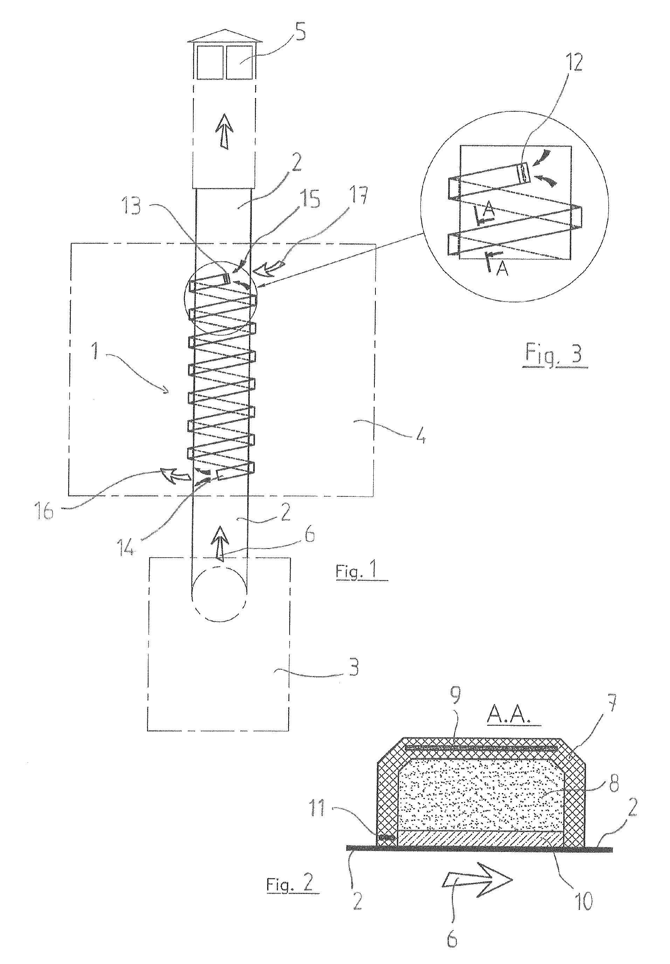

On a représenté en figure 1 un exemple non limitatif de l'invention dans lequel le dispositif 1 comporte un canal de circulation d'air unique enroulé de manière hélicoïdale autour d'une portion de la surface extérieure d'un conduit 2. Par exemple, le conduit 2 peut être un élément tubulaire dont le volume intérieur permet l'évacuation d'un fluide chauffé. Typiquement, le fluide chauffé est un gaz issu d'une combustion au niveau d'un foyer tel un foyer à bois ou au charbon.

En figure 1, ce foyer est représenté par l'appareil de chauffage 3 au niveau duquel l'extrémité inférieure du conduit 2 débouche. Le flux de gaz chaud est schématisé par la flèche 6 dont le mouvement montre l'évacuation du fluide chauffé depuis l'appareil de chauffage 3 vers une sortie 5 telle la portion haute d'un conduit de cheminée. A ce niveau, les traits mixtes schématisent le fait que l'appareil de chauffage 3 et la sortie 5 peuvent être sensiblement éloignés.

Dans le cas illustré, le dispositif 1 équipe le conduit 2 au niveau d'un volume 4 à chauffer tel le volume d'une pièce par lequel le conduit 2 est amené à passer. Dans l'exemple, le conduit 1 comporte un seul canal de circulation pourvu d'une première extrémité servant d'embouchure d'entrée 13 et d'une deuxième extrémité servant d'embouchure de sortie 14. Les embouchures 13 et 14 sont avantageusement éloignées l'une de l'autre suivant la direction d'évacuation 6 pour profiter de la longueur du conduit lors d'échanges thermiques entre le fluide chauffé et l'air circulant dans le canal de circulation d'air du dispositif 1. La forme du canal n'est pas limitative et peut par exemple adopter celle présentée en figure 2 avec une section transversale sensiblement rectangulaire. L'intérieur du canal constitue un volume de transit 8 délimité relativement au volume à chauffer 4 par l'intermédiaire d'une enveloppe 7. Dans le cas illustré, l'enveloppe 7 a sensiblement la forme d'un U dont les branches peuvent s'appliquer sur la surface extérieure du conduit. L'enveloppe 7 peut se suffire à elle-même pour délimiter le volume de transit 8 mais, préférentiellement, une couche d'interface 10 équipe le dispositif 1 pour constituer un élément intermédiaire entre le volume de transit 8 et la surface extérieure du conduit 2. La couche d'interface 10 peut être réalisée en tout matériau voire être réalisée de façon monobloc avec l'enveloppe 7. Avantageusement, la couche d'interface 10 est une paroi d'un matériau plus conducteur thermiquement que l'enveloppe 7, telle une paroi métallique plutôt que polymère pour l'enveloppe 7. L'épaisseur de la couche d'interface 10 peut être inférieure à celle de l'enveloppe 7. La paroi inférieure de l'enveloppe 7 peut être réfléchissante pour renvoyer la chaleur vers la couche d'interface 10. La couche d'interface 10 peut se suffire à elle-même. Néanmoins, une possibilité consiste à utiliser une pâte thermique pour compléter la couche d'interface 10. On peut employer une pâte thermique du type utilisée dans le domaine de la micro électronique pour associer des dissipateurs thermiques à des dispositifs électroniques. Il peut s'agir de pâte thermique à base de silicone ou encore à base de céramique.

Les dimensions du canal ne sont pas limitées et à titre d'exemple, une largeur comprise entre 1 et 5 centimètres pour une hauteur comprise entre 5 millimètres et 3 centimètres peuvent convenir. Par ailleurs, tout matériau avantageusement isolant thermiquement peut être utilisé pour l'enveloppe 7 et notamment des matériaux plastiques polymères déformables. Avantageusement, on profite de la flexibilité du matériau de l'enveloppe 7 pour assurer une bonne applicabilité de cette dernière sur la surface extérieure du conduit 2. Suivant une première possibilité, le matériau de l'enveloppe 7 est choisi de manière à ce que cette déformation soit rémanente c'est-à-dire qu'il y ait une conservation de la forme du canal après son application autour du conduit 2. De manière alternative, le canal combine un premier matériau pour l'enveloppe 7 choisi flexible et une armature 9 réalisée en un matériau déformable de manière rémanente par exemple une lame de métal plastifiable. De cette façon, on peut employer pour l'enveloppe 7 un matériau léger et essentiellement choisi pour ces propriétés thermiques et concentrer sur l'armature 9 la fonction de conservation de forme.

On peut ainsi au moyen de l'invention fabriquer et livrer le dispositif sous forme sensiblement linéaire et réaliser, in situ, sa mise en forme par simple enroulage autour de la surface extérieure du conduit 2. On a représenté en figure 1 un exemple de résultat obtenu par cet enroulage en donnant une forme sensiblement hélicoïdale au canal de circulation. Cette disposition n'est cependant pas limitative de l'invention et on aurait pu monter le dispositif 1 de manière longitudinale uniquement sur le conduit 2.

Au niveau de l'une de ses embouchures, le canal comporte des moyens de ventilation 12. Avantageusement, ces moyens comprennent au moins un ventilateur à hélice entraîné de sorte à produire une aspiration représentée par la flèche 17 en figure 1 au niveau du flux d'air entrant 15 dans le canal. Le principe des moyens de ventilation étant de produire une aspiration, ils pourraient être placés sur tout autre partie de la longueur du dispositif 1.

Avantageusement, le dispositif comprend un câblage électrique 11 permettant d'assurer la connexion électrique entre une partie d'alimentation (par exemple associée à une prise électrique ou un transformateur) et une motorisation électrique des moyens de ventilation 12. Dans le cas représenté en figure 2, le câblage électrique 11 est noyé dans la matière de l'enveloppe 7 de sorte à la parcourir sur toute sa longueur de manière invisible.

On comprend que dans le mode de réalisation illustré, l'utilisateur dispose à l'origine d'un dispositif sensiblement rectiligne. Il peut alors commencer à enrouler le dispositif autour du conduit 2 de sorte à former une spirale montante. Le dispositif 1 peut être maintenu en position sur le conduit 2 par tout moyen et avantageusement par une couche d'adhésif au niveau de l'interface entre la couche d'interface 10 et la surface extérieure du conduit 2. En position de stockage, la surface extérieure de la couche d'interface 10 équipée de la couche d'adhésif peut être protégée par une pellicule pelable enlevée juste avant le montage par l'utilisateur.

Le procédé de montage de l'invention est donc particulièrement aisé et adaptable à toutes formes et dimensions de conduit 2.

On notera que la figure 1 schématise que la présente invention contrarie avantageusement le flux normal de l'air circulant dans le volume de transit 8. En effet, sans les moyens de ventilation 12, le sens du flux serait inverse et aurait tendance à amener l'air chauffé vers la partie supérieure du volume à chauffer 4.

Dans le cas représenté, le dispositif comporte un canal de circulation d'air unique réalisé d'un seul tenant et enroulé autour de la surface extérieure du conduit 2. Une alternative consiste à former plusieurs canaux de circulation éventuellement parallèle les uns aux autres alignés suivant la direction longitudinale du conduit 2 ou non. En particulier, une formation en spirale enroulée de manière hélicoïdale autour de la surface de conduit peut encore être utilisée dans le cadre d'une pluralité de canaux. Par ailleurs, le ou les canaux peuvent être formés dans une pluralité de pièces assemblables les unes aux autres. Ainsi, on peut former au moins deux pièces formant chacune une portion de coque applicable sur la surface extérieure du conduit et présentant une possibilité d'assemblage suivant une ligne de jonction dirigée suivant la dimension longue du conduit 2. En pratique, la formation d'un couple de pièces chacune de forme demi cylindrique et assemblables au niveau de leurs bordures longitudinales a donné satisfaction. Ces deux pièces peuvent être maintenues solidaires par tout moyen et notamment par des crochets. Le système peut être livré en deux demi coques articulées et simplement assemblées et serrées autour du conduit par tout moyen tels crochets à ressort ou vis ou autre.

Chacune des pièces porte une partie du ou des canaux de circulation. Lorsque le ou les canaux sont organisés de manière hélicoïdale, chacun de ces canaux est formé pour partie dans l'une des pièces et pour partie dans l'autre pièce, l'air circulant alors dans le canal en passant alternativement d'une portion de canal formée sur une pièce à une portion de canal formée sur l'autre pièce.

Comme indiqué plus haut, plusieurs canaux peuvent être implémentés. En outre un canal peut comprendre, dans le volume qu'il délimite, une pluralité de chenaux sensiblement parallèles entre eux le long du canal et dont la somme des volumes intérieurs forme le volume de transit 8. La cohésion entre chenaux peut être assurée par un matériau de remplissage tel une mousse polymère, une pâte thermique ou une pluralité de billes thermiquement conductrices. Avec plusieurs chenaux superposés et juxtaposés, les échanges thermiques peuvent être amplifiés. Les moyens de ventilation peuvent être mutualisés pour plusieurs chenaux.

D'une manière générale, la hauteur du dispositif rapporté sur le conduit peut être par exemple de 20 à 40 centimètres. Par ailleurs, les moyens de ventilation peuvent être directement positionné dans le volume de transit 8 ou parvenir dans ce dernier par d'autres biais. Par exemple, le dispositif 1 peut comporter au niveau de l'embouchure d'entrée 13 un collecteur d'air lui-même équipé des moyens de ventilation.

Toujours de manière préférée, l'embouchure de sortie 14 présente une composante radiale non nulle de sorte à projeter le flux sortant 16 de manière éloignée relativement au conduit 2.

### REFERENCES

1. Dispositif
2. Conduit
3. Appareil de chauffage
4. Volume à chauffer
5. Sortie
6. Flux de gaz chaud
7. Enveloppe
8. Volume de transit
9. Armature
10. Couche d'interface
11. Câblage électrique
12. Moyens de ventilation
13. Embouche d'entrée
14. Embouche de sortie
15. Flux d'air entrant
16. Flux d'air sortant
17. Aspiration

## Revendications

1. Dispositif (1) de récupération d'énergie calorifique, comprenant au moins un canal de circulation d'air applicable sur la surface extérieure d'un conduit (2) d'évacuation d'un fluide chauffé, le canal de circulation d'air étant configuré pour chauffer de l'air au cours de sa circulation entre une embouchure d'entrée (13) et une embouchure de sortie (14) du canal, les embouchures d'entrée et de sortie (13), (14) étant espacées suivant une direction d'évacuation du fluide chauffé,
**caractérisé par le fait qu'**il comporte des moyens de ventilation (12) du canal configurés pour créer une circulation forcée de l'air depuis l'embouchure d'entrée (13) en direction de l'embouchure de sortie (14), et dans lequel le canal de circulation d'air comporte une enveloppe (7) délimitant par rapport à l'air ambiant un volume de transit (8), et une couche d'interface (10) entre le volume de transit (8) et la surface extérieure du conduit (2).

2. Dispositif selon la revendication précédente dans lequel l'embouchure d'entrée (13) est située à un niveau de hauteur supérieur à l'embouchure de sortie (14).

3. Dispositif selon l'une des revendications précédentes dans lequel le canal de circulation d'air comporte au moins une portion de forme hélicoïdale autour du conduit (2).

4. Dispositif selon l'une des revendications précédentes dans lequel la couche d'interface comporte une pâte thermique.

5. Dispositif selon l'une des revendications précédentes dans lequel l'enveloppe (7) est monobloc.

6. Dispositif selon la revendication précédente dans lequel le canal de circulation d'air est déformable de façon rémanente de sorte à s'enrouler autour du conduit (2).

7. Dispositif selon la revendication précédente dans lequel l'enveloppe (7) est flexible et comporte une armature (9) déformable de façon rémanente de sorte à maintenir en forme le canal de circulation.

8. Dispositif selon l'une des revendications précédentes comportant suivant la longueur de l'enveloppe (7), des organes de câblage électrique (11) configurés pour opérer une jonction électrique entre des moyens de raccordement à une alimentation électrique et une motorisation électrique des moyens de ventilation.

9. Dispositif selon l'une des revendications 1 à 4 dans lequel le canal de circulation d'air est formé dans au moins deux pièces assemblables autour du conduit.

10. Dispositif selon la revendication précédente dans lequel les au moins deux pièces sont assemblables suivant des jonctions orientées selon la dimension longue du conduit (2).

11. Dispositif selon la revendication précédente dans lequel les deux pièces ont chacune une forme en demi cylindre.
